## Europäisches Patentamt

## European Patent Office

## Office européen des brevets

(19)

(11) Publication number: **0 316 126 B1**

## EUROPEAN PATENT SPECIFICATION

(12)

(45) Date of publication of patent specification: **30.12.92**

(51) Int. Cl.⁵: **B32B 15/04**, E04B 1/94, E04C 2/26, E04D 3/35

(21) Application number: **88310461.4**

(22) Date of filing: **07.11.88**

(54) Fire resistant roofs and walls and prefabricated panels for use in their production.

| | |
|---|---|
| (30) Priority: **09.11.87 NO 874643** | (73) Proprietor: **ELKEM-ROCKWOOL ELKEM A/S & A/S ROCKWOOL**<br>**P.O. Box 4215 Torshov**<br>**N-0401 Oslo 4(NO)** |
| (43) Date of publication of application:<br>**17.05.89 Bulletin 89/20** | |
| (45) Publication of the grant of the patent:<br>**30.12.92 Bulletin 92/53** | (72) Inventor: **Kathrud, Otto Sander**<br>**Halandsvei 3**<br>**N-3055 Krokstadelva(NO)** |
| (84) Designated Contracting States:<br>**AT BE CH DE ES FR GB GR IT LI LU NL SE** | |
| (56) References cited:<br>**DE-U- 8 511 428**<br>**FR-A- 2 523 180**<br>**US-A- 3 913 292** | (74) Representative: **Rees, David Christopher et al**<br>**Kilburn & Strode 30 John Street**<br>**London WC1N 2DD(GB)** |

EP 0 316 126 B1

## Description

The present invention relates to fire resistant roof and wall constructions and to prefabricated panels for use in manufacturing fire resistant roof and wall constructions.

The requirements which are set to fire resistance of roof and wall constructions for offshore platforms are very strict. It is required that roof and wall constructions for use on offshore platforms on the Norwegian shelf shall be able to withstand a hydrocarbon fire for at least two hours. This implies that the roof and wall constructions have to withstand a temperature of about 1100°C for at least two hours. In addition to the fire resistance, the roof and wall constructions also have to meet other requirements such as for example the avoidance of condensation. Finally roof constructions on offshore platform also have to bear a certain mechanical load so that the roofs can be used for example as storage areas.

Known roof and wall constructions for offshore platforms have a number of drawbacks and disadvantages. Firstly, they can not be prefabricated to any extent, but must be built up on site. The production will thus be dependent upon satisfactory temperature and weather conditions and masking of the environment is necessary. The production costs will therefore be high and the production time long. Furthermore, existing fire resistant roof and wall constructions do not fulfil all their other requirements. Thus, it is known that condensation of water often appears in connection with the known constructions.

Fire resistant roofs for offshore constructions are normally built upon a steel deck which is arranged on beams which form part of the building framework. The present invention relates to fire resistant roof and wall constructions which are installed on such decks or on the outside of corresponding wall plates.

It is an object of the present invention to provide roof and wall constructions which fulfil the most severe fire resistance requirements and which in addition satisfy all other requirements which such constructions have to meet.

It is further an objection of the present invention to provide prefabricated panels for use in the production of such fire resistant roof and wall constructions.

Accordingly, the present invention provides a fire resistant roof or wall construction comprising prefabricated panels, where each panel is built up in order, from an outer fire resistant sheet, an inner layer of concrete connected to said fire resistant sheet and a layer of insulating, fire resistant material connected to the concrete layer, the panels being placed side by side with said layer of fire resistant insulating material being located upon the outside of a plane roof or wall, the outer fire resistant sheet of the panels being affixed to each other by welding or gluing,

In a preferred embodiment, the outer fire resistant sheet is made from steel, preferably stainless steel. The layer of concrete preferably consists of a lightweight concrete having a density of from 500 to 1000 kg/m$^3$ (0.5 to 1 kg/dm$^3$), and the layer of insulating fire resistant material preferably consists of rock wool blocks.

The present invention also extends to a prefabricated panel for use in the production of fire resistant roofs and walls, which panel comprises in order, an outer sheet of a fire resistant material, a layer of concrete connected to the outer sheet and a layer of insulating, fire resistant material.

According to a preferred embodiment the outer sheet of the panel is made from steel, preferably stainless steel. The layer of concrete is preferably a lightweight concrete with a density of from 500 to 1000 kg/m$^3$ (0.5 to 1 kg/dm$^3$). The layer of insulating, fire resistant material is preferably made from rock wool. The outer steel shell is preferably in the form of a tray, whereby during manufacturing of the panel the outer steel shell has the function of a casting mould for the layer of lightweight concrete.

Preferably, the layer of insulating, fire resistant material is laterally displaced in relation to the outer steel sheet and the layer of concrete.

A roof and wall construction according to the present invention has a number of advantages over the known fire-resistant roof and wall constructions. In addition to the ability to withstand a hydrocarbon fire for at least two hours, the panels which are used can be prefabricated in a very economically viable way and to a high quality. The panels have a low weight, which is important in connection with offshore platforms. The panels can be installed very quickly, as the only operations necessary are the location of the panels, welding the outer fire-resistant sheets, and the necessary adjustments of corners, etc.

The installation of the roof and wall construction can be carried out regardless of the temperature and weather conditions, and masking of the environment is not necessary. Other kinds of work can take place simultaneously with the installation of the roof and wall construction. Furthermore, the roof construction according to the present invention will have a sufficient strength for the finished roof to be used as a storage area.

Additionally the use of roof and wall construction according to the present invention renders it unnecessary to install additional thermal or acoustic insulation layers, as the roof and wall construction has inherently superior thermal and acoustic insulation properties.

One of the reasons for the excellent fire resistance of the roof and wall construction according to the present invention is that there is no steel connection between the outer sheet and the inner roof and wall constructions. So-called hot spots are thereby completely avoided. The roof and wall construction according to the present invention is very flexible as the prefabricated panels may easily be cut loose and replaced if required. As the prefabricated panels completely seal the underlying steel constructions of the building, corrosion on these inner steel structures is avoided. Finally, the roof and wall construction according to the present invention is practically maintenance free.

The invention may be carried into practice in various ways and some embodiments will now be described with reference to the accompanying drawings, in which:-

Figure 1 is a schematic view, partially in section of a first embodiment of a roof construction according to the present invention; and

Figure 2 is a similar view of a second embodiment of a roof construction according to the present invention.

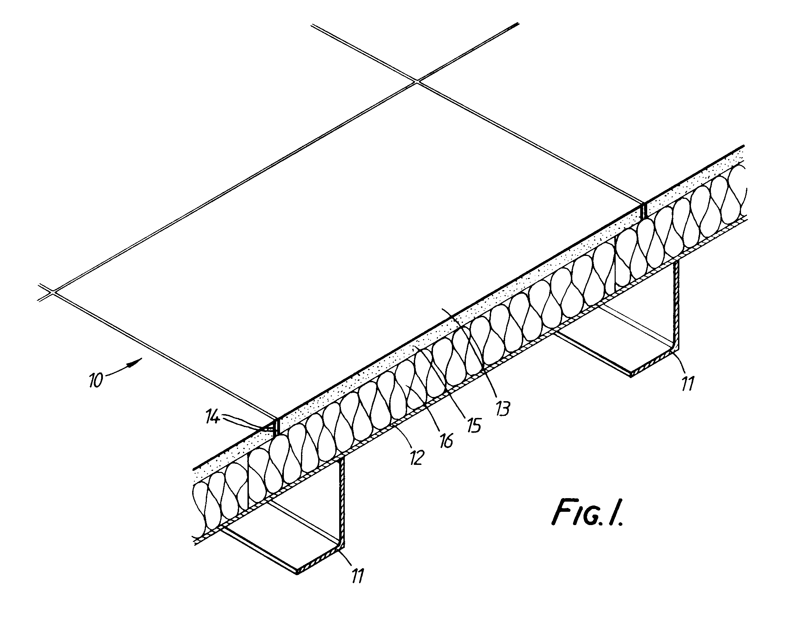

Figure 1 shows a part of a roof construction for the living quarters of an offshore platform. The inner roof of the living quarters is of conventional design, for example with steel beams 11 to which steel sheets 12 are welded. On the sheets 12, prefabricated fire resistant panels 10 according to the present invention are placed. The panels 10 are made up of three different layers. The outer layer comprises a sheet 13 made from a fire-resistant material, preferably steel. The steel sheet 13, can for example be made from stainless steel having a thickness of at least 1.5 mm. Each steel sheet 13 is bent over at all its edges so that it has the form of an inverted tray with sidewalls 14.

A layer of concrete 15 is affixed to the steel sheet 13. The layer of concrete 15 is preferably made from a lightweight concrete having a density between 500 and 1000 kg/m$^3$ (0.5 and 1 kg/dm$^3$). In order to ensure that good connection between the steel sheet 13 and the concrete layer 15, the steel sheet is preferably equipped with a number of armouring iron bars, welding pins or the like (not shown on the Figure). In order to ensure a good fire resistance, the concrete layer 15 should have a thickness of at least 15mm and preferably at least 20 mm.

On the concrete layer 15 a layer of fire resistant, insulating material 16 is arranged. The fire resistant, insulating material 16 is preferably rock wool in block form, for example, 100mm thick rock wool blocks having a bulk density of 100kg/m$^3$ and preferably a bulk weight of about 150kg/m$^3$. Such rock wool blocks are produced by Elkem-Rockwool, Elkem a/s & A/S Rockwool, Norway. The layer of fire resistant, insulating material 16 is preferably laterally displaced in relation to the outer steel sheet 13 and the concrete layer 15 as shown in Figure 1.

The panels 10 are placed side by side upon the steel sheet 12 and are interconnected to form a single unit by welding adjacent edges of the outer steel sheet 13 of the panels. In this way an even, completely sealed roof is obtained. Such a roof construction can bear an evenly distributed load of up to 15KN/m$^2$. Furthermore, it is very simple to produce, and the panels 10 can easily be cut in order to adjust for corners, openings for ventilation etc.

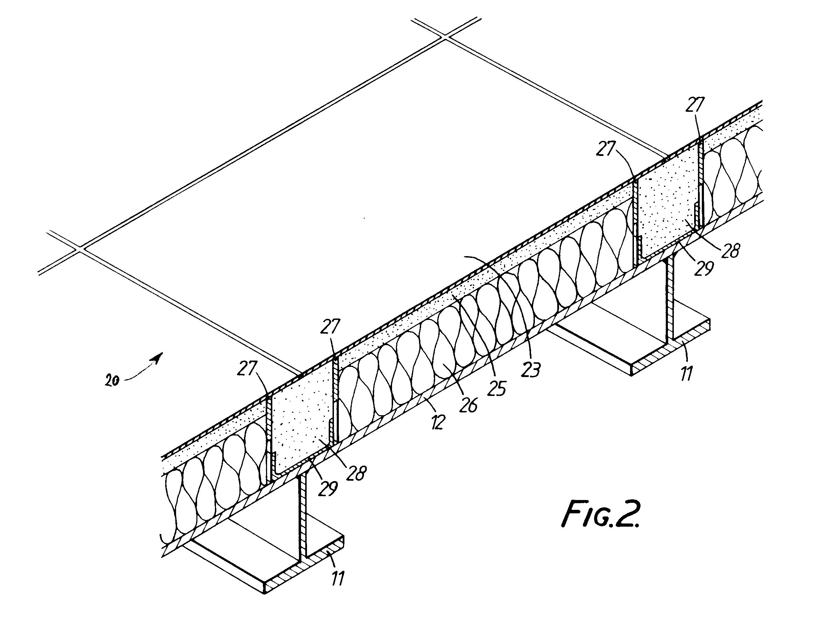

Figure 2 shows a second embodiment of the roof construction according to the present invention. This embodiment is intended to have an increased load bearing ability, making it possible to use the roof as a main storage area.

The prefabricated panels 20 are built up with similar layers as shown in the embodiment of Figure 1. The panels 20 in Figure 2 differ from the panels 10 in Figure 1 in that the outer steel sheet 23 which preferably has a thickness of at least 6mm, extends beyond the inner concrete layer 25 and the layer of fire resistant, insulating material 26. In order to increase the load bearing ability it is preferred to use a 100mm thick rock wool block having a bulk density of 320 kg/m$^3$. Such rock wool blocks are produced by Elkem-Rockwool, Elkem a/s & A/S Rockwool, Norway. Flat irons 27 are welded to the underside of the outer steel sheet 23 and form together with the outer steel sheet 23 a mould for the inner concrete layer 25. Beams 28 made from lightweight concrete are arranged between adjacent panels 20, in order to stiffen the fire resistant roof construction. The beams 28 are preferably arranged in U-shaped steel profiles 29.

In the embodiment shown in Figure 2, the panels 20 are welded together in the same way as described in connection with the embodiment shown in Figure 1.

An evenly, completely sealed roof is thus obtained. Due to the beams 28, the thickness of the outer steel sheet 23 and the bulk density of the insulation material, a considerably improved load bearing ability is obtained for the roof construction according to the embodiment of Figure 2, compared to the roof construction shown in Figure 1. Thus, the roof construction shown in Figure 2 can bear a load of at least 25 KN/m$^2$ and concentrated load of 40KN on a 0.09m$^2$ area. This means that the roof construction can bear the weight of a forklift truck of medium size.

It can be shown that the concrete beams 28 reduce the fire resistance of the roof construction to only a negligible extent.

In order to test the fire resistance of the roof and wall constructions according to the present invention, a suitable construction was subjected to hydrocarbon fire conditions. A roof and wall construction was built up of prefabricated panels comprising an outer stainless steel sheet with a thickness of 2.5mm, a layer of light weight concrete having a thickness of 20mm and a a layer of rock wool insulation blocks having a thickness of 100mm and a bulk density of 150 kg/m$^3$. The outer steel sheets of the panels were welded together and the construction placed upon a 6mm thick steel sheet. The outside of the construction was subjected to a temperature of 1100-1150$^o$C in an oil-fired furnace fired with fuel oil having a density of 800 kg/m$^3$ (0.80kg/litre). The temperature on the unexposed side of the roof construction was measured at eight points. After 120 minutes of testing no break through of smoke or flames were observed on the unexposed side. The average temperature increase on the unexposed side was about 121$^o$C after 120 minutes and the highest point temperature measured was about 143$^o$C.

The requirement for fire resistance against hydrocarbon fires which such roof and wall constructions have to meet is that during 120 minutes testing, no smoke or flames shall be observed on the unexposed side. Further, during this time, the average temperature increase on the surface of the unexposed side shall not exceed 139$^o$C, and no point on the unexposed side shall have a temperature increase which exceed 180$^o$C. The roof and wall constructions according to the present invention thus satisfied the requirements which are set for fire resistance against hydrocarbon fires.

## Claims

1. A fire resistant roof or wall construction, characterised in that it is made up of prefabricated panels (10, 20) each comprising, in order, an outer sheet (13, 23) of a fire resistant material, an inner layer of concrete (15, 25) and a layer of fire resistant insulating material (16, 26), said layer of fire resistant, insulating material being placed upon the outside of a plane roof or wall (12), adjacent prefabricated panels (10, 20) being closely affixed to each other by welding, or gluing of the outer sheets (13, 23) of the panels.

2. A construction as claimed in Claim 1 characterised in that the outer sheet (13) is made from steel.

3. A construction as claimed in Claim 2, characterised in that the steel sheet (13) has a thickness of at least 1.5mm.

4. A construction as claimed in any preceding claim, characterised in that the layer of concrete (15) is made up from a lightweight concrete having a density between 500 and 1000 kg/m$^3$ (0.5 and 1 kg/dm$^3$).

5. A construction as claimed in any preceding claim characterised in that the insulating material (16) comprises blocks of rock wool having a thickness of at least 100mm and a bulk density of at least 100kg/m$^3$, preferably 320kg/m$^3$.

6. A construction as claimed in any of claims 2 to 5 characterised in that a beam (28) made from concrete is located between adjacent prefabricated panels and the outer steel sheets (23) of the panels cover the top surface of the beam (28).

7. A prefabricated panel (10) for use in making fire resistant roof and wall constructions, characterised in that the panel comprises, in order, an outer sheet (13) of a fire resistant material, an inner layer of concrete (15) and a layer (16) of a fire resistant, insulating material.

8. A panel as claimed in Claim 7 characterised in that the layer (16) of fire resistant, insulating material is laterally displaced relative to the outer sheet (13) and the inner concrete layer (15).

9. A panel as claimed in Claim 7 or Claim 8 characterised in that the outer sheet (13) is a steel sheet having a thickness of at least 1.5mm.

10. A panel as claimed in any of Claims 7 to 9 characterised in that the concrete layer (15) is made from a lightweight concrete having a density of between 500 and 1000 kg/m$^3$ (0.5 and 1 kg/dm$^3$).

11. A panel as claimed in any of Claims 7 to 10 characterised in that the layer of fire resistant, insulating material (16) comprises rock wool blocks having a thickness of at least 100mm and a bulk density of at least 150 kg/m$^3$.

12. A panel as claimed in any of Claims 9 to 11 characterised in that the outer steel sheet (13) is formed with sides (14) generally in the shape of a inverted tray, whereby the outer steel sheet (13) constitutes a casting mould for the layer of lightweight concrete (15) during manufacture of the panel.

**Patentansprüche**

1. Feuerfeste Dach- oder Wandkonstruktion, dadurch gekennzeichnet, daß sie aus vorgefertigten Paneelen (10, 20) gefertigt ist, von denen jedes, in folgender Reihenfolge, eine äußere Platte (13, 23) aus einem feuerfesten Material, eine innere Betonschicht (15, 25) und eine Schicht von feuerfestem, isolierendem Material (16, 26) aufweist, wobei die Schicht aus dem feuerfesten, isolierenden Material auf der Außenseite eines ebenen Daches oder einer ebenen Wand (12) angeordnet ist und benachbarte vorgefertigte Paneele (10, 20) durch Verschweißen oder Verkleben der äußeren Platten (13, 23) der Paneele dicht miteinander verbunden sind.

2. Konstruktion nach Anspruch 1, dadurch gekennzeichnet, daß die äußere Platte (13) aus Stahl gefertigt ist.

3. Konstruktion nach Anspruch 2, dadurch gekennzeichnet, daß die Stahlplatte (13) eine Stärke von wenigstens 1,5 mm aufweist.

4. Konstruktion nach einem der Ansprüche 1 bis 3, dadurch gekennzeichnet, daß die Betonschicht (15) aus Leichtbeton einer Dichte zwischen 500 und 1000 kg/m$^3$ besteht.

5. Konstruktion nach einem der Ansprüche 1 bis 4, dadurch gekennzeichnet, daß das isolierende Material (16) aus Steinwolle-Blöcken einer Stärke von wenigstens 100 mm und einer Packungsdichte von wenigstens 100 kg/m$^3$, vorzugsweise 320 kg/m$^3$, gebildet ist.

6. Konstruktion nach einem der Ansprüche 2 bis 5, dadurch gekennzeichnet, daß ein Balken (28) aus Beton zwischen benachbarten, vorgefertigten Paneelen angeordnet ist und daß die äußeren Stahlplatten (23) der Paneele die Oberfläche des Balkens (28) bedecken.

7. Vorgefertigtes Paneel (10) zur Herstellung von feuerfesten Dach- und Wandkonstruktionen, dadurch gekennzeichnet, daß das Paneel, in folgender Reihenfolge, eine äußere Platte (13) aus einem feuerfesten Material, eine innere Betonschicht (15) und eine Schicht (16) aus einem feuerfesten, isolierenden Material aufweist.

8. Paneel nach Anspruch 7, dadurch gekennzeichnet, daß die Schicht (16) aus dem feuerfesten, isolierenden Material gegenüber der Außenplatte (13) und der inneren Betonschicht (15) seitlich versetzt angeordnet ist.

9. Paneel nach Anspruch 7 oder 8, dadurch gekennzeichnet, daß die äußere Platte (13) eine Stahlplatte einer Stärke von wenigstens 1,5 mm ist.

10. Paneel nach einem der Ansprüche 7 bis 9, dadurch gekennzeichnet, daß die Betonschicht (15) aus Leichtbeton einer Dichte zwischen 500 und 1000 kg/m$^3$ besteht.

11. Paneel nach einem der Ansprüche 7 bis 10, dadurch gekennzeichnet, daß die Schicht aus dem feuerfesten, isolierenden Material (16) aus Steinwolle-Blöcken einer Stärke von wenigstens 100 mm und einer Packungsdichte von wenigstens 150 kg/m$^3$ gebildet ist.

12. Paneel nach einem der Ansprüche 9 bis 11, dadurch gekennzeichnet, daß die äußere Stahlplatte (13) mit Seiten (14) allgemein in der Form einer umgekehrten Wanne ausgebildet ist, wobei die äußere Stahlplatte (13) während der Herstellung des Paneels als Gießform für die Leichtbetonschicht (15) dient.

**Revendications**

1. Agencement de murs ou toits résistant au feu, caractérisé en ce qu'il est constitué de panneaux préfabriqués (10, 20) chacun comportant, dans l'ordre, une feuille externe (13, 23) d'un matériau résistant au feu, une couche interne (15, 25) de béton et une couche (16, 26) d'un matériau isolant résistant au feu, laquelle couche d'un matériau isolant résistant au feu est placée sur l'extérieur d'un mur ou toit plan (12), les panneaux (10, 20) préfabriqués adjacents étant intimement fixés entre eux par soudure, ou collage, des feuilles externes (13, 23) des panneaux.

2. Agencement selon la revendication 1, caractérisé en ce que la feuille externe (13) est en acier.

3. Agencement selon la revendication 2, caractérisé en ce que la feuille d'acier (13) a une épaisseur d'au moins 1,5 mm.

4. Agencement selon l'une quelconque des revendications précédentes, caractérisé en ce que la couche de béton (15) est faite d'un béton léger ayant une densité comprise entre 500 et 1000 kg/m$^3$ (0,5 à 1 kg/dm$^3$).

5. Agencement selon l'une quelconque des revendications précédentes, caractérisé en ce que le matériau isolant (16) est constitué de blocs de laine de roche ayant une épaisseur d'au moins 100 mm et une densité d'au moins 100 kg/m$^3$, préférentiellement 320 kg/m$^3$.

6. Agencement selon l'une quelconque des revendications 2 à 5, caractérisé en ce qu'une poutre (28) faite en béton est placée entre les panneaux préfabriqués adjacents et en ce que les feuilles d'acier externes (23) des panneaux couvrent la surface supérieure de la poutre (28).

7. Panneau préfabriqué (10) à utiliser pour constituer l'agencement de murs ou toits résistant au feu, caractérisé en ce que le panneau comporte, dans l'ordre, une feuille externe (13) d'un matériau résistant au feu, une couche interne de béton (15) et une couche (16) d'un matériau isolant résistant au feu.

8. Panneau selon la revendication 7, caractérisé en ce que la couche (16) de matériau isolant résistant au feu est décalée latéralement par rapport à la couche externe (13) et la couche interne de béton (15).

9. Panneau selon la revendication 7 ou 8, caractérisé en ce que la feuille extérieure (13) est une feuille d'acier ayant une épaisseur d'au moins 1,5 mm.

10. Panneau selon l'une quelconque des revendications 7 à 9, caractérisé en ce que la couche de béton (15) est faite d'un béton léger ayant une densité comprise entre 500 et 1000 kg/m$^3$ (0,5 à 1 kg/dm$^3$).

11. Panneau selon l'une quelconque des revendications 7 à 10, caractérisé en ce que la couche de matériau isolant résistant au feu (16) est constituée de blocs de laine de roche ayant une épaisseur d'au moins 100 mm et une densité d'au moins 150 kg/m$^3$.

12. Panneau selon l'une quelconque des revendications 9 à 11, caractérisé en ce que la feuille d'acier externe (13) a des rebords (14), lui donnant la forme générale d'un plateau inversé, lequel constitue ainsi un moule pour la couche de béton léger (15) durant la fabrication du panneau.

10

14

12

16

15

13

11

11

*FIG.I.*

Fig.2.